Europäisches Patentamt

European Patent Office

Office européen des brevets

(11) Publication number: **0 208 234**
**A1**

## (12) EUROPEAN PATENT APPLICATION

(21) Application number: 86108938.1

(22) Date of filing: 01.07.86

(51) Int. Cl.⁴: **H01B 3/12** , **C04B 35/46** ,
//H01G4/12

(30) Priority: 02.07.85 JP 145412/85

(43) Date of publication of application:
**14.01.87 Bulletin 87/03**

(84) Designated Contracting States:
**DE GB NL**

(71) Applicant: **NGK Spark Plug Co. Ltd.**
**14-18, Takatsuji-machi Mizuho-ku**
**Nagoya-shi, Aichi-ken(JP)**

(72) Inventor: **Kinoshita, Takeo NGK SPARK PLUG**
**CO. LTD.**
**14-18, Takatsuji-cho Mizuho-ku**
**Nagoya-shi Aichi(JP)**
Inventor: **Tsunooka, Tsutomu c/o NGK SPARK**
**PLUG CO. LTD.**
**14-18, Takatsuji-cho Mizuho-ku**
**Nagoya-shi Aichi(JP)**

(74) Representative: **Patentanwälte Grünecker,**
**Kinkeldey, Stockmair & Partner**
**Maximilianstrasse 58**
**D-8000 München 22(DE)**

(54) **High permittivity ceramic composition.**

(57) A high-permittivity ceramic composition which is represented by the formula:

$$xPb(Ni_{1/3} \bullet Nb_{2/3})O_3 - yPbTiO_3 - zPb(W_{1/2} \bullet Ni_{1/2})O_3$$

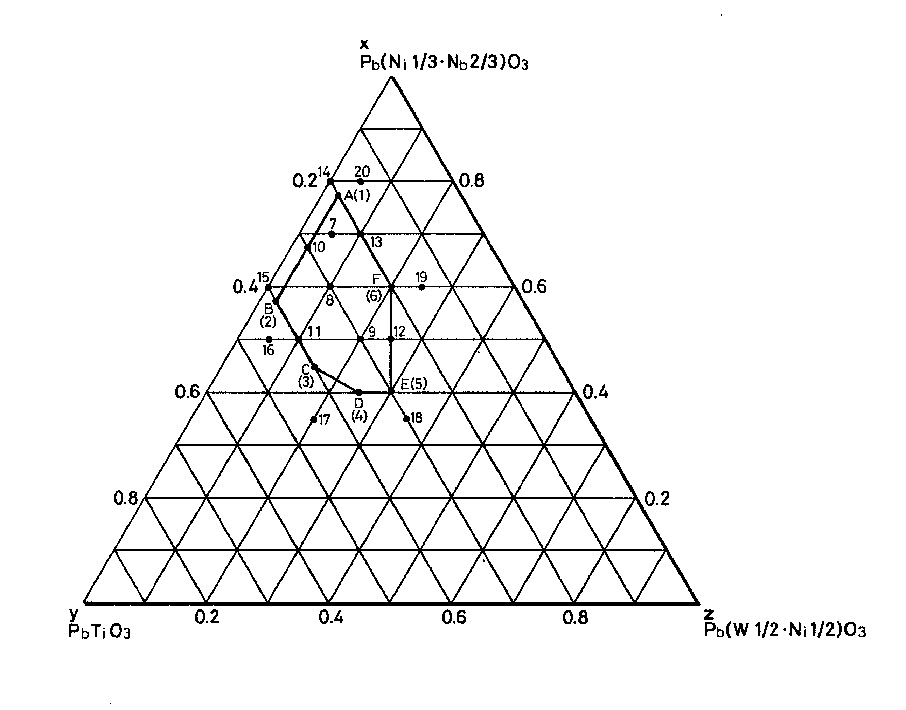

wherein $x + y + z = 1.0$, and which is included within the hexagonal area defined by connecting the following points A -B -C -D -E -F -A inclusive of the six points and the connecting lines therebetween marked on the ternary composition diagram which is shown in the drawing, on a molar fraction basis:

|   | x | y | z |
|---|------|------|------|
| A | 0.78 | 0.2  | 0.02 |
| B | 0.58 | 0.4  | 0.02 |
| C | 0.45 | 0.4  | 0.15 |
| D | 0.4  | 0.35 | 0.25 |
| E | 0.4  | 0.3  | 0.3  |
| F | 0.6  | 0.2  | 0.2. |

# HIGH PERMITTIVITY CERAMIC COMPOSITION

FIELD OF THE INVENTION

BACKGROUND OF THE INVENTION

The present invention relates to a highpermittivity ceramic composition suitable for use in a capacitor, particularly a multi-layer type capacitor incorporating thin metal films.

PRIOR ART

At this time, the most widely used material for capacitors is a barium titanate based dielectric ceramic composition. However, the ceramic composition based on barium titanate is not highly adaptive to mass production, since it requires high firing temperatures in the range of 1300-1400°C. This $BaTiO_3$ based ceramic material may be employed in a multi-layer type capacitor, but this is only possible when either platinum or palladium, which are capable of withstanding the aforementioned high temperatures, is used as the material for the thin metal film incorporated as an internal electrode.

SUMMARY OF THE INVENTION

The present invention provides a dielectric ceramic composition which can be produced by firing at temperatures not higher than 1100°C and which yet retains a dielectric constant of 2000 or more at 20°C. This composition is represented by the formula:

$$xPb(Ni\ 1/3 \bullet Nb\ 2/3)O_3\ -yPbTiO_2\ -zPb(W\ 1/2 \bullet Nb\ 1/2)O_3$$

wherein $x + y + z = 1.0$, and which is included within the hexagonal area which is defined by connecting points A -B -C -D -E -F -A inclusive of the six points and the connecting lines therebetween marked on the ternary composition diagram which is shown in the drawing, on a molar fraction basis:

|   | x | y | z |
|---|------|------|------|
| A | 0.78 | 0.2  | 0.02 |
| B | 0.58 | 0.4  | 0.02 |
| C | 0.45 | 0.4  | 0.15 |
| D | 0.4  | 0.35 | 0.25 |
| E | 0.4  | 0.3  | 0.3  |
| F | 0.6  | 0.2  | 0.2. |

BRIEF DESCRIPTION OF THE DRAWING

The attached drawing shows a ternary composition diagram for the ceramic composition of the present invention which is represented by the formula:

$$xPb(Ni\ 1/3 \bullet Nb\ 2/3)O_3\ -yPbTiO_3\ -zPb(W\ 1/2 \bullet Ni\ 1/2)O_3.$$

DETAILED DESCRIPTION OF THE INVENTION

As will be apparent from the data given in Table 1 below, samples of the compostion included within the hexagonal area which is defined by connecting points A -B -C -D -E -F -A marked on the ternary composition diagram shown in the drawing can be sintered at temperatures of up to 1100°C and yet exhibited satisfactory properties.

EXAMPLE

Starting materials which are commercially available and indicated below were mixed together in such amounts as to provide 20 samples of final products having compositions included within the ternary composition diagram as shown in the attached drawing.

PbO : 99.5% pure

$NiCO_3$ : 90.0% pure

$Nb_2O_5$ : 99.5% pure

$TiO_2$ : 99.0% pure

$WO_3$ : 99.5% pure

Twenty batches, each weighing 2000 g, of the mixtures of these ingredients were individually charged into a polyurethanelined alumina pot mill - (capacity: 4,000 ml) containing 2000 g of alumina balls (10 mm average diameter). Each batch was subjected to primary disintegration and mixing for 3 hours by a dry mixing method. Thereafter, each batch was calcined by being held in the air at an optimum temperature between 700 and 800°C for a period of 2 hours. Appropriate amounts of an organic binder and water were added to the disintegrated particles in each lot. The particles were subjected to secondary disintegration and mixing at 90 rpm for 16 hours in the same alumina pot mill that was used for the primary disintegration and mixing. The particles were then granulated by spray drying.

The granules in each lot were formed into a disk (30 mm average diameter x 1 mm thickness) in a molding press at a pressure of 1000 $kg/cm^2$. The thus formed disks were sintered at optimal temperatures for 2 hours in an atmosphere of PbO by standard techniques. An electrode was formed on both principal surfaces of each sintered product by firing silver. The twenty samples of the ceramic composition thus prepared were tested for their dielectric loss, capacitance, and insulation resistance by the following methods. The results are summarized in Table 1.

Dielectric loss and capacitance:

Measured with a digital LCR meter at 25°C and at 1 kHz and 1 volt (rms)

Insulation resistance:

A voltage of 100 volts was applied for 1 minute across a sample finished to have a thickness of 0.5 mm.

## Table 1

| Sample No. | Composition (mol%) | | | Sintering Temperature (°C) | Dielectric Constant | Dielectric Loss (%) | Change in Capacitance | | Insulation Resistance (MΩ) | Specific Resistance (Ω·m) | Remarks |
|---|---|---|---|---|---|---|---|---|---|---|---|
| | Pb(Ni1/3·Nb2/3)O$_3$ | PbTiO$_3$ | Pb(W1/2·Ni1/2)O$_3$ | | | | 20-25°C (%) | 20-85°C (%) | | | |
| 1 (point A) | 78 | 20 | 2 | 1100 | 6050 | 0.6 | +64.2 | −60.3 | 640 | $1.02 \times 10^9$ | Within the scope of the invention |
| 2 (point B) | 58 | 40 | 2 | 1100 | 5020 | 1.5 | −20.1 | +72.5 | 6300 | $2.80 \times 10^{10}$ | |
| 3 (point C) | 45 | 40 | 15 | 1000 | 5920 | 3.0 | −53.3 | −64.2 | 71500 | $2.97 \times 10^{10}$ | |
| 4 (point D) | 40 | 35 | 25 | 970 | 7120 | 2.8 | −25.6 | −62.3 | 96700 | $4.02 \times 10^{10}$ | |
| 5 (point E) | 40 | 30 | 30 | 940 | 2480 | 0.1 | +47.0 | −46.0 | 91000 | $6.77 \times 10^{10}$ | |
| 6 (point F) | 60 | 20 | 20 | 1030 | 2140 | 0.1 | +45.9 | −45.9 | 1050 | $9.12 \times 10^8$ | |
| 7 | 70 | 25 | 5 | 1060 | 9260 | 0.6 | +16.5 | −59.4 | 1960 | $2.05 \times 10^9$ | |
| 8 | 60 | 30 | 10 | 1030 | 11740 | 0.8 | −22.3 | −58.5 | 4760 | $5.02 \times 10^9$ | |
| 9 | 50 | 30 | 20 | 980 | 4720 | 0.1 | +50.5 | −52.0 | 31000 | $2.85 \times 10^{10}$ | |
| 10 | 68 | 30 | 2 | 1100 | 19700 | 2.5 | −58.0 | −46.7 | 2520 | $2.11 \times 10^9$ | |
| 11 | 50 | 40 | 10 | 1060 | 4660 | 2.3 | −30.5 | +84.8 | 7900 | $6.31 \times 10^9$ | |
| 12 | 50 | 25 | 25 | 950 | 3120 | 0.1 | +45.2 | −40.3 | 33000 | $2.51 \times 10^{10}$ | |
| 13 | 70 | 20 | 10 | 1060 | 5050 | 0.3 | +59.5 | −55.5 | 930 | $1.09 \times 10^9$ | |

0 208 234

<div align="center"><u>Table 1</u>   (continued)</div>

| Sample No. | Composition (mol%) | | | Sintering Temperature (°C) | Dielectric Constant | Dielectric Loss (%) | Change in Capacitance 20-25°C (%) | 20-85°C (%) | Insulation Resistance (MΩ) | Specific Resistance (Ω·m) | Remarks |
|---|---|---|---|---|---|---|---|---|---|---|---|
| | $Pb(Ni_{1/3}\cdot NB_{2/3})O_3$ | $PbTiO_3$ | $Pb(W_{1/2}\cdot Ni_{1/2})O_3$ | | | | | | | | |
| 14 | 80 | 20 | – | 1150 | 9540 | 0.9 | +65.1 | –61.2 | 520 | $3.95 \times 10^8$ | Outside scope of the invention |
| 15 | 80 | 20 | – | 1150 | 6220 | 2.0 | –31.5 | +63.2 | 4300 | $3.27 \times 10^9$ | |
| 16 | 50 | 45 | 5 | 1160 | 2200 | 1.8 | –20.4 | +59.3 | 9200 | $6.99 \times 10^9$ | |
| 17 | 35 | 45 | 20 | 940 | 1430 | 0.2 | –40.3 | +80.6 | 9100 | $6.92 \times 10^9$ | |
| 18 | 35 | 30 | 35 | 910 | 1850 | 0.1 | +43.3 | –42.4 | 120000 | $9.12 \times 10^{10}$ | |
| 19 | 60 | 15 | 25 | 950 | 1140 | 0.1 | +40.2 | –45.5 | 1100 | $8.36 \times 10^8$ | |
| 20 | 80 | 15 | 5 | 1130 | 2960 | 0.6 | +49.6 | –50.2 | 572 | $6.16 \times 10^8$ | |
| Reference $BaTiO_3$ (standard values) | | | | 1300 | 8500 | 1.5 | –57.0 | –75.0 | – | $1.52 \times 10^{11}$ | conventional product |

Sample Nos. 1 to 13 were the compositions of the present invention which were included within the hexagonal area defined by connecting points A -B -C -D -E -F -A, inclusive of the six points and the connecting lines therebetween marked on the ternary composition diagram shown in the attachment. These samples could be produced by sintering at temperatures not higher than 1100°C, and yet retained values of dielectric constant which were not lower than 2000. On the other hand, sample Nos. 14 to 20, which were outside of the hexagonal area, failed to satisfy the desired properties, either with respect to sintering temperature - ($\leq$1100°C) or the dielectric constant ($\geq$2000). That is, they either had to be sintered at temperatures higher than 1100°C or exhibited values of dielectric constant less than 2000.

The dielectric ceramic composition of the present invention which is included within the hexagonal area defined by connecting points A -B -C -D -E -F -A marked on the ternary composition diagram shown in the attached drawing can be sintered at a temperature of up to 1100°C and yet exhibits a dielectric constant no smaller than 2000 while satisfying other requirements for use in high-permittivity ceramic capacitors, such as low dielectric loss and change in capacitance. Because of this advantage, the ceramic composition of the present invention is highly useful for mass production of capacitors. In addition, it can be employed in a multi-layer type ceramic capacitor with silver or an alloy thereof being used as an internal electrode metal. Since silver or alloys thereof are far less expensive than the heretofore used high-melting metals such as platinum and vanadium, the manufacturing cost of multi-layer type ceramic capacitors can be significantly reduced by using the high-permittivity ceramic composition of the present invention.

While the invention has been described in detail and with reference to specific embodiments thereof, it will be apparent to one skilled in the art that various changes and modifications can be made therein without departing from the spirit and scope thereof.

## Claims

1 A high-permittivity ceramic composition which is represented by the formula:

$$x\text{Pb}(\text{Ni } 1/3 \bullet \text{Nb } 2/3)\text{O}_3 \text{ -}y\text{PbTiO}_3 \text{ -}z\text{Pb}(\text{W } 1/2 \bullet \text{Ni } 1/2)\text{O}_3$$

wherein $x + y + z = 1.0$, and which is included within the hexagonal area defined by connecting the following points A -B -C -D -E -F -A inclusive of the six points and the connecting lines therebetween marked on the ternary composition diagram which is shown in the drawing, on a molar fraction basis:

|   | x | y | z |
|---|------|------|------|
| A | 0.78 | 0.2 | 0.02 |
| B | 0.58 | 0.4 | 0.02 |
| C | 0.45 | 0.4 | 0.15 |
| D | 0.4 | 0.35 | 0.25 |
| E | 0.4 | 0.3 | 0.3 |
| F | 0.6 | 0.2 | 0.2. |

2. A high-permittivity ceramic composition according to Claim 1, wherein the composition has a dielectric constant of 2000 or more at 20°C and is capable of being produced by firing at temperatures not higher than 1100°C.

3. A ceramic capacitor having a composition consisting essentially of

$0.6\text{Pb}(\text{Ni } 1/3 \bullet \text{Nb } 2/3)\text{O}_3 \text{ -}0.3\text{PbTiO}_3 \text{ -}0.1\text{Pb}(\text{W } 1/2 \bullet \text{Ni } 1/2)\text{O}_3$.

x
Pb(Ni 1/3 · Nb 2/3)O₃

0.2 14  20
A(1)
7
10  13
F
0.4 15  (6)
8
B
(2)  11  9  12
16
C
(3)  E(5)
D
(4)
17  18

y
PbTiO₃  0.2  0.4  0.6  0.8  z
Pb(W 1/2 · Ni 1/2)O₃

0.8
0.6
0.4
0.2

0.6
0.8

## DOCUMENTS CONSIDERED TO BE RELEVANT

EP 86108938.1

| Category | Citation of document with indication, where appropriate, of relevant passages | Relevant to claim | CLASSIFICATION OF THE APPLICATION (Int. Cl.4) |
|---|---|---|---|
| X | JP - A2 - 60-86 072 (NIPPON ELEC-TRIC) <br> * Claims; table; fig. * | 1-3 | H 01 B  3/12 <br> C 04 B 35/46 <br> /H 01 G  4/12 |
| P | & Chemical Abstracts, vol. 103, no. 12, September 23, 1985, Columbus, Ohio, USA <br> Page 647, right hand column <br> * Abstract-no. 97 549s * | | |
| Y | JP - A2 - 58-49 662 (MORATA) <br> & Chemical Abstracts, vol. 99, no. 8, August 22, 1983, Columbus, Ohio, USA <br> Page 242, right hand column <br> * Abstract-no. 57 802m * | 1-3 | |
| Y | JP - A2 - 59-57 954 (NIPPON ELEC-TRIC) <br> & Chemical Abstracts, vol. 101, no. 6, August 6, 1984, Columbus, Ohio, USA <br> Page 576, right hand column <br> * Abstract-no. 47 398e * | 1-3 | **TECHNICAL FIELDS SEARCHED (Int. Cl.4)** <br> H 01 B  3/00 <br> C 04 B 35/00 <br> H 01 G  4/00 |
| A | US - A - 4 450 240 (MIYAMOTO et al.) <br> * Abstract; fig. * | 1-3 | |

The present search report has been drawn up for all claims

| Place of search | Date of completion of the search | Examiner |
|---|---|---|
| VIENNA | 04-09-1986 | KUTZELNIGG |